(19) Europäisches Patentamt
European Patent Office
Office européen des brevets

(11) **EP 4 445 101 B1**

(12) **EUROPEAN PATENT SPECIFICATION**

(45) Date of publication and mention
of the grant of the patent:
**28.01.2026 Bulletin 2026/05**

(21) Application number: **21830886.4**

(22) Date of filing: **06.12.2021**

(51) International Patent Classification (IPC):
*G01F 1/84* *(2006.01)*

(52) Cooperative Patent Classification (CPC):
**G01F 1/8436**

(86) International application number:
**PCT/US2021/061976**

(87) International publication number:
**WO 2023/107090 (15.06.2023 Gazette 2023/24)**

(54) **TOTALIZING A FLOW RATE OF A MULTI-PHASE/SINGLE-PHASE FLOW**

TOTALISIERUNG EINER DURCHFLUSSRATE EINER MEHRPHASIGEN/EINPHASIGEN STRÖMUNG

TOTALISATION DU DÉBIT D'UN ÉCOULEMENT À PHASES MULTIPLES/À PHASE UNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2024 Bulletin 2024/42**

(73) Proprietor: **Micro Motion, Inc.**
**Boulder, CO 80301 (US)**

(72) Inventor: **BUTTLER, Marc Allan**
**Erie, Colorado 80516 (US)**

(74) Representative: **Ellis, Christopher Paul**
**Ollila Law Limited**
**Unit 7 The Courtyard**
**Timothys Bridge Road**
**Stratford upon Avon CV37 9NP (GB)**

(56) References cited:
**WO-A1-2016/140733      WO-A1-2021/177961**

**Description**

TECHNICAL FIELD

The embodiments described below relate to totalizing flow rates and, more particularly, to totalizing a flow rate of a multi-phase/single-phase flow.

BACKGROUND

Vibratory meters, such as for example, Coriolis mass flowmeters, liquid density meters, gas density meters, liquid viscosity meters, gas/liquid specific gravity meters, gas/liquid relative density meters, and gas molecular weight meters, are generally known and are used for measuring fluid parameters. Generally, vibratory meters comprise a sensor assembly and a meter electronics. A sensor assembly may be communicatively coupled to the meter electronics and provide sensor signals to the meter electronics. The sensor assembly may include conduits configured to vibrate in response to a driving force imposed by an actuator that receives a drive signal from the meter electronics. The actuator may be referred to as a driver.

When the conduits are used in the sensor assembly, the conduits may be filled with material having properties to be measured. The material within the conduit or conduits of the sensor assembly may be flowing or stationary. The sensor assembly may be used to measure one or more fluid parameters such as mass flow rate, density, or other properties of a material in the sensor assembly. More specifically, there may be one or more transducers affixed to the conduit or conduits configured to convert vibratory motion into sensor signals. These transducers may be referred to as pick-off sensors. The pick-off sensors are typically located at inlet and outlet portions of the conduit or conduits.

As noted above, the vibratory meter may be a Coriolis flow meter. The Coriolis flow meter includes one or more conduits that are connected inline in a pipeline or other transport system and convey material, e.g., fluids, slurries, and/or the like, in the system. Each conduit may be viewed as having a set of natural vibration modes including, for example, simple bending, torsional, radial, and coupled modes. In a Coriolis flow measurement application, a conduit is excited in one or more vibration modes as material flows through the conduit, and motion of the conduit is measured at points spaced along the conduit. During flow, the vibrating tube and the flowing mass couple together due to Coriolis forces, causing a phase difference in the vibration between the ends of the tube. The phase difference may be directly proportional to the mass flow and may be measured as a phase difference between two sensor signals provided by the pick-off sensors.

For example, the mass flow rate of the material may be proportional to a phase difference or the time delay between the two sensor signals, where the time delay may comprise a phase difference divided by frequency. The mass flow rate can therefore be determined by, for example, multiplying the time delay by a proportionality constant or calibration factor, which may be referred to as a Flow Calibration Factor (FCF). The FCF may reflect the material properties and mechanical properties of the flow tube. The FCF may be determined by a calibration process prior to installation of the flow meter into a pipeline or other conduit. In the calibration process, a material is flowed through the conduit at a known flow rate and a proportionality constant between the phase difference or time delay and the flow rate is calculated and recorded as the FCF.

A flow measured by the vibratory meter may be a comprised of both multi-phase portions and single-phase portions. For example, the flow through the vibratory meter may be entirely gas for a period of time followed by a multi-phase flow, such as mist. There may also be a liquid phase. Such a flow may be referred to as a multi-phase/single-phase flow. These flows may occur in, for example, petroleum wells that produce gas or liquid. A totalizing of such a flow must accurately measure all three of the flow regimes: gas, liquid, and multi-phase. Accordingly, there is a need for totalizing a multi-phase/single-phase flow.

WO 2016/140733 A1 discloses a method for operating a vibratory flowmeter according to the prior art.

SUMMARY

A method for totalizing a flow rate of a multi-phase/single-phase flow is provided. According to an embodiment, the method comprises detecting that a liquid flow is being measured and switching a totalizing of the multi-phase/single-phase flow from an estimated gas mass flow rate of a precedent multi-phase flow to an estimated gas mass flow rate of the liquid flow.

A meter electronics for totalizing a flow rate of a multi-phase/single phase flow is provided. According to an embodiment, the meter electronics comprises an interface configured to receive sensor signals from a sensor assembly configured to contain and measure the multi-phase/single-phase flow and a processing system communicatively coupled to the interface. The processing system is configured to detect that a liquid flow is being measured and switch a totalizing of the multi-phase/single-phase flow from an estimated gas mass flow rate of a precedent multi-phase flow to an estimated gas mass flow rate of the liquid flow.

ASPECTS

According to an aspect, a method for totalizing a flow rate of a multi-phase/single-phase flow comprises detecting that a liquid flow is being measured and switching a totalizing of the multi-phase/single-phase flow from an estimated gas mass flow rate of a precedent multi-phase flow to an estimated gas mass flow rate of the liquid flow.

Preferably, the method further comprises detecting that the precedent multi-phase flow is being measured and switching the totalizing of the multi-phase/single-phase flow from a measured mass flow rate of a precedent gas flow to the estimated gas mass flow rate of the precedent multi-phase flow.

Preferably, detecting that the precedent multi-phase flow is being measured comprises determining at least one of if a drive gain is greater than a multi-phase threshold and if a density is greater than a gas density threshold.

Preferably, the estimated gas mass flow rate of the precedent multi-phase flow comprises an average of the measured mass flow rates of the precedent gas flow.

Preferably, the method further comprises detecting that a subsequent multi-phase flow is being measured and switching the totalizing of the multi-phase/single-phase flow from the estimated gas mass flow rate of the liquid flow to an estimated gas mass flow rate of the subsequent multi-phase flow.

Preferably, the estimated gas mass flow rate of the subsequent multi-phase flow comprises an average of the measured mass flow rates of the precedent gas flow.

Preferably, the method further comprises detecting that a subsequent gas flow is being measured and switching the totalizing of the multi-phase/single-phase flow from the estimated gas mass flow rate of the subsequent multi-phase flow to a measured mass flow rate of the subsequent gas flow.

Preferably, the method further comprises averaging the measured mass flow rate of the precedent gas flow and the measured mass flow rate of the subsequent gas flow and determining a gas delta value between the estimated gas mass flow rate of the precedent and subsequent multi-phase flows and the average of the measured mass flow rates of the precedent gas flow and the measured mass flow rates of the subsequent gas flow.

Preferably, totalizing the multi-phase/single-phase flow further comprises cumulating the gas delta value.

Preferably, the method further comprises determining a gas mass total from the totalizing of the multi-phase/-single-phase flow by summing gas mass flow rate values between a totalizing start time and a totalizing end time.

Preferably, the method further comprises determining at least one of an unmitigated mass total and a liquid mass total.

Preferably, determining the unmitigated mass total comprises cumulating a measured mass flow rate of the multi-phase/single-phase flow.

Preferably, determining the liquid mass total comprises subtracting the gas mass total from the unmitigated mass total.

Preferably, detecting that the liquid flow is being measured comprises determining that a density is greater than a liquid density threshold.

According to an aspect, a meter electronics for totalizing a flow rate of a multi-phase/single phase flow comprises an interface configured to receive sensor signals from a sensor assembly configured to contain and measure the multi-phase/single-phase flow and a processing system communicatively coupled to the interface. The processing system is configured to detect that a liquid flow is being measured and switch a totalizing of the multi-phase/single-phase flow from an estimated gas mass flow rate of a precedent multi-phase flow to an estimated gas mass flow rate of the liquid flow.

Preferably, the processing system is further configured to detect that the precedent multi-phase flow is being measured and switching the totalizing of the multi-phase/single-phase flow from a measured mass flow rate of a precedent gas flow to the estimated gas mass flow rate of the precedent multi-phase flow.

Preferably, the processing system being configured to detect that the precedent multi-phase flow is being measured comprises the processing system being configured to determine at least one of if a drive gain is greater than a multi-phase threshold and if a density is greater than a gas density threshold.

Preferably, the estimated gas mass flow rate of the precedent multi-phase flow comprises an average of the measured mass flow rates of the precedent gas flow.

Preferably, the processing system is further configured to detect that a subsequent multi-phase flow is being measured and switching the totalizing of the multi-phase/single-phase flow from the estimated gas mass flow rate of the liquid flow to an estimated gas mass flow rate of the subsequent multi-phase flow.

Preferably, the estimated gas mass flow rate of the subsequent multi-phase flow comprises an average of the measured mass flow rates of the precedent gas flow.

Preferably, the processing system is further configured to detect that a subsequent gas flow is being measured and switch the totalizing of the multi-phase/single-phase flow from the estimated gas mass flow rate of the subsequent multi-phase flow to a measured mass flow rate of the subsequent gas flow.

Preferably, the processing system is further configured to average the measured mass flow rate of the precedent gas flow and the measured mass flow rate of the subsequent gas flow and determine a gas delta value between the estimated gas mass flow rate of the precedent and subsequent multi-phase flows and the average of the measured mass flow rates of the precedent gas flow and the measured mass flow rates of the subsequent gas flow.

Preferably, the processing system being configured to totalize the multi-phase/single-phase flow comprises the processing system being configured to cumulate the gas delta value.

Preferably, the processing system is further configured to determine a gas mass total from the totalizing of the multi-phase/single-phase flow by summing gas mass flow rate values between a totalizing start time and a totalizing end time.

Preferably, the processing system is further configured to determine at least one of an unmitigated mass total and a liquid mass total.

Preferably, the processing system being configured to determine the unmitigated mass total comprises the processing system being configured to cumulate a measured mass flow rate of the multi-phase/single-phase flow.

Preferably, the processing system being configured to determine the liquid mass total comprises the processing system being configured to subtract the gas mass total from the unmitigated mass total.

Preferably, the processing system being configured to detect that the liquid flow is being measured comprises the processing system being configured to determine that a density is greater than a liquid density threshold.

BRIEF DESCRIPTION OF THE DRAWINGS

The same reference number represents the same element on all drawings. It should be understood that the drawings are not necessarily to scale.

FIG. 1 shows a vibratory meter 5 configured to totalize a flow rate of a multi-phase/single-phase flow.
FIG. 2 shows a block diagram of the vibratory meter 5, including a block diagram representation of the meter electronics 20, configured to totalize a flow rate of a multi-phase/single-phase flow.
FIG. 3 shows the meter electronics 20 configured to totalize a multi-phase/liquid-phase flow.
FIG. 4 shows a graph 400 illustrating various measurements of a multi-phase/single-phase flow.
FIG. 5 shows a method 500 of totalizing a flow rate of a multi-phase/single-phase flow.

DETAILED DESCRIPTION

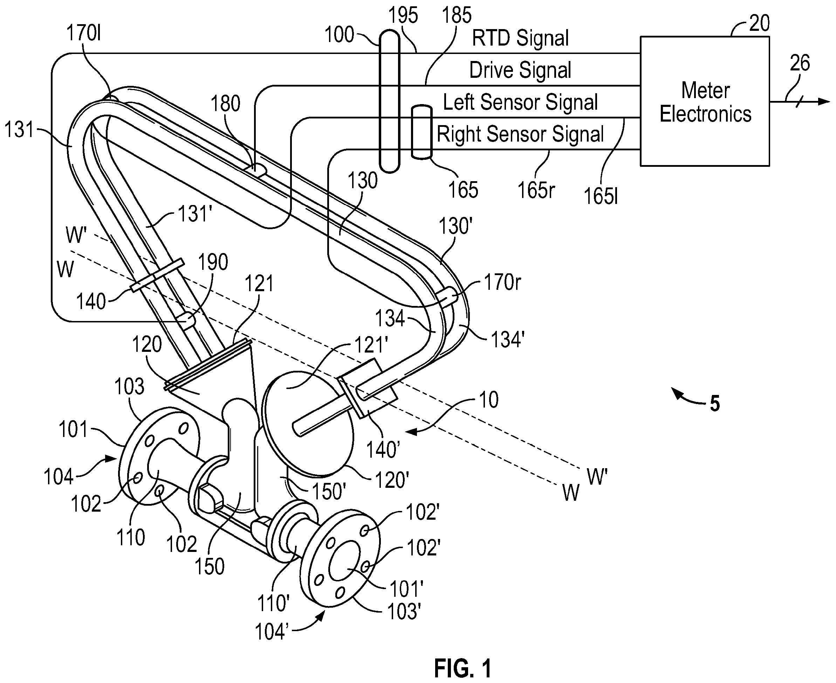

FIGS. 1-5 and the following description depict specific examples to teach those skilled in the art how to make and use the best mode of embodiments of totalizing a flow rate of a multi-phase/single-phase flow. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of totalizing the flow rate of the multi-phase/single-phase flow. As a result, the embodiments described below are not limited to the specific examples described below, but only by the claims and their equivalents.

**FIG. 1** shows a vibratory meter 5 configured to totalize a flow rate of a multi-phase/single-phase flow. As shown in FIG. 1, the vibratory meter 5 comprises a sensor assembly 10 and meter electronics 20. The sensor assembly 10 responds to mass flow rate and density of a process material. The meter electronics 20 is connected to the sensor assembly 10 via leads conveying sensor signals 100. As can be appreciated, the sensor signals 100 include the RTD signal, drive signal, and the left and right sensor signals. The meter electronics 20 may be configured to use the sensor signals 100 to calculate and provide density, mass flow rate, temperature information, or the like, over port 26.

The sensor assembly 10 includes a pair of manifolds 150 and 150', flanges 103 and 103' having flange necks 110 and 110', a pair of conduits 130 and 130', driver 180, resistive temperature detector (RTD) 190, and a pair of pick-off sensors 170l and 170r. Conduits 130 and 130' have two inlet legs 131, 131' and outlet legs 134, 134', which converge towards each other at conduit mounting blocks 120 and 120'. The conduits 130, 130' bend at two symmetrical locations along their length and are essentially parallel throughout their length. Brace bars 140 and 140' serve to define the axis W and W' about which each conduit 130, 130' oscillates. The inlet and outlet legs 131, 131' and 134, 134' of the conduits 130, 130' are fixedly attached to conduit mounting blocks 120 and 120' and these blocks, in turn, are fixedly attached to manifolds 150 and 150'. This provides a continuous closed material path through sensor assembly 10.

When flanges 103 and 103', having holes 102 and 102' are connected, via inlet end 104 and outlet end 104' into a process line (not shown) which carries the process material that is being measured, material enters inlet end 104 of the meter through an orifice 101 in the flange 103 and is conducted through the manifold 150 to the conduit mounting block 120 having a surface 121. Within the manifold 150 the material is divided and routed through the conduits 130, 130'. Upon exiting the conduits 130, 130', the process material is recombined in a single stream within the block 120' having a surface 121' and the manifold 150' and is thereafter routed to outlet end 104' connected by the flange 103' having holes 102' to the process line (not shown).

The conduits 130, 130' are selected and appropriately mounted to the conduit mounting blocks 120, 120' so as to have substantially the same mass distribution, moments of inertia and Young's modulus about bending axes W--W and W'--W', respectively. These bending axes go through the brace bars 140, 140'. Inasmuch as the Young's modulus of the conduits change with temperature, and this change affects the calculation of flow and density, RTD 190 is mounted to conduit 130' to continuously measure the temperature of the conduit 130'. The temperature of the conduit 130' and hence the voltage appearing across the RTD 190 for a given current passing therethrough is governed by the temperature of the material passing through the conduit 130'. The temperature dependent voltage appearing across the RTD 190 is used in a well-known method by the meter electronics 20 to compensate for the change in elastic modulus of the conduits 130, 130' due to any changes in conduit temperature. The RTD 190 is connected to the meter electronics 20 by lead 195.

Both of the conduits 130, 130' are driven by driver 180 in opposite directions about their respective bending axes W and W' and at what is termed the first out-of-phase bending mode of the vibratory meter. This driver 180 may comprise any one of many well-known arrangements, such as a magnet mounted to the conduit 130' and an opposing coil mounted to the conduit 130 and through which an alternating current is passed for vibrating both conduits 130, 130'. A suitable drive signal 185 is applied by the meter electronics 20, via a lead, to the driver 180.

The meter electronics 20 receives the RTD temperature signal on lead 195, and sensor signals 165 appearing via leads carrying sensor signals 100 or more particularly left and right sensor signals 165l, 165r. The meter electronics 20 produces the drive signal 185 appearing on the lead to driver 180 and vibrate conduits 130, 130'. The meter electronics 20 processes the left and right sensor signals 165l, 165r and the RTD signal from lead 195 to compute the mass flow rate and the density of the material passing through sensor assembly 10. This information, along with other information, is applied by meter electronics 20 over a port 26 as a signal. A more detailed discussion of the meter electronics 20 follows.

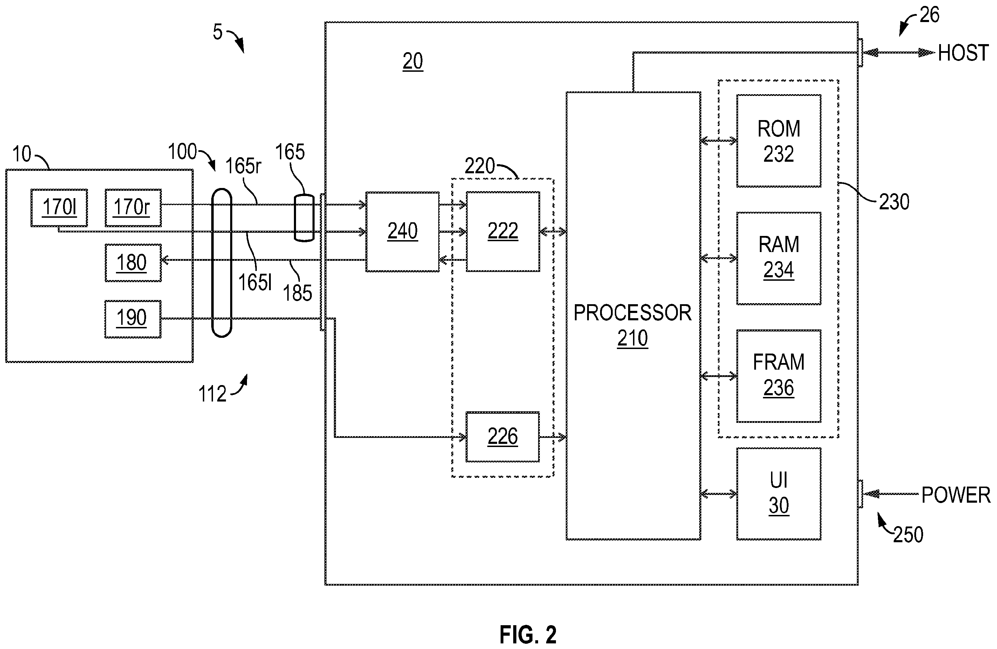

**FIG. 2** shows a block diagram of the vibratory meter 5, including a block diagram representation of the meter electronics 20, configured to totalize a flow rate of a multi-phase/single-phase flow. As shown in FIG. 2, the meter electronics 20 is communicatively coupled to the sensor assembly 10. As described in the foregoing with reference to FIG. 2, the sensor assembly 10 includes the left and right pick-off sensors 170l, 170r, driver 180, and RTD 190, which are communicatively coupled to the meter electronics 20 via the set of leads through a communications channel 112.

The meter electronics 20 provides a drive signal 185 via the leads carrying the sensor signals 100. More specifically, the meter electronics 20 provides a drive signal 185 to the driver 180 in the sensor assembly 10. In addition, sensor signals 165 comprising the left sensor signal 165l and the right sensor signal 165r are provided by the sensor assembly 10. More specifically, in the embodiment shown, the sensor signals 165 are provided by the left and right pick-off sensor 170l, 170r in the sensor assembly 10. As can be appreciated, the sensor signals 165 are respectively provided to the meter electronics 20 through the communications channel 112.

The meter electronics 20 includes a processor 210 communicatively coupled to one or more signal processors 220 and one or more memories 230. The processor 210 is also communicatively coupled to a user interface 30. The processor 210 is communicatively coupled with the host via a communication port over the port 26 and receives electrical power via an electrical power port 250. The processor 210 may be a microprocessor although any suitable processor may be employed. For example, the processor 210 may be comprised of sub-processors, such as a multi-core processor, serial communication ports, peripheral interfaces (e.g., serial peripheral interface), on-chip memory, I/O ports, and/or the like. In these and other embodiments, the processor 210 is configured to perform operations on received and processed signals, such as digitized signals.

The processor 210 may receive digitized sensor signals from the one or more signal processors 220. The processor 210 is also configured to provide information, such as a phase difference, a property of a fluid in the sensor assembly 10, or the like. The processor 210 may provide the information to the host through the communication port. The processor 210 may also be configured to communicate with the one or more memories 230 to receive and/or store information in the one or more memories 230. For example, the processor 210 may receive calibration factors and/or sensor assembly zeros (e.g., phase difference when there is zero flow) from the one or more memories 230. Each of the calibration factors and/or sensor assembly zeros may respectively be associated with the vibratory meter 5 and/or the sensor assembly 10. The processor 210 may use the calibration factors to process digitized sensor signals received from the one or more signal processors 220.

The one or more signal processors 220 is shown as being comprised of an encoder/decoder (CODEC) 222 and an analog-to-digital converter (ADC) 226. The one or more signal processors 220 may condition analog signals, digitize the conditioned analog signals, and/or provide the digitized signals. The CODEC 222 is configured to receive the sensor signals 165 from the left and right pick-off sensors 170l, 170r. The CODEC 222 is also configured to provide the drive signal 185 to the driver 180. In alternative embodiments, more or fewer signal processors may be employed.

As shown, the sensor signals 165 are provided to the CODEC 222 via a signal conditioner 240. The drive signal 185 is provided to the driver 180 via the signal conditioner 240. Although the signal conditioner 240 is shown as a single block, the signal conditioner 240 may be comprised of signal conditioning components, such as two or more op-amps, filters, such as low pass filters, voltage-to-current amplifiers, or the like. For example, the sensor signals 165 may be amplified by a first amplifier and the drive signal 185 may be amplified by the voltage-to-current amplifier. The amplification can ensure that the magnitude of the sensor signals 165 is approximate the full-scale range of the CODEC 222.

In the embodiment shown, the one or more memories 230 is comprised of a read-only memory (ROM) 232, random access memory (RAM) 234, and a ferroelectric random-access memory (FRAM) 236. However, in alternative embodiments, the one or more memories 230 may be comprised of more or fewer memories. Additionally, or alternatively, the one or more memories 230 may be comprised of different types of memory (e.g., volatile, non-volatile, etc.). For example, a different type of non-volatile memory, such as, for example, erasable programmable read only memory (EPROM), or the like, may be employed instead of the FRAM 236. The one or more memories 230 may be a storage configured to store process data, such as drive or sensor signals, mass flow rate or density measurements, etc.

A mass flow rate measurement can be generated according to the equation:

$$\dot{m} = FCF[\Delta t - \Delta t_0]; \qquad\qquad [1]$$

where:

$\dot{m}$ is a measured mass flow rate;
$FCF$ is a flow calibration factor;
$\Delta t$ is a measured time delay; and
$\Delta t_0$ is a zero-flow time delay.

The measured time delay $\Delta t$ comprises an operationally-derived (*i.e.,* measured) time delay value comprising the time delay existing between the pick-off sensor signals, such as where the time delay is due to Coriolis effects related to mass flow rate through the vibratory meter 5. The measured time delay $\Delta t$ is a direct measurement of a mass flow rate of the flow material as it flows through the vibratory meter 5. The zero-flow time delay $\Delta t_0$ comprises a time delay at a zero flow. The zero-flow time delay $\Delta t_0$ is a zero-flow value that may be determined at the factory and programmed into the vibratory meter 5. The zero-flow time delay $\Delta t_0$ is an exemplary zero-flow value. Other zero-flow values may be employed, such as a phase difference, time difference, or the like, that are determined at zero flow conditions. A value of the zero-flow time delay $\Delta t_0$ may not change, even where flow conditions are changing. A mass flow rate value of the material flowing through the vibratory meter 5 is determined by multiplying a difference between measured time delay $\Delta t$ and a reference zero-flow value $\Delta t_0$ by the flow calibration factor $FCF$. The flow calibration factor $FCF$ is proportional to a physical stiffness of the vibratory meter.

As to density, a resonance frequency at which each conduit 130, 130' may vibrate may be a function of the square root of a spring constant of the conduit 130, 130' divided by the total mass of the conduit 130, 130' having a material. The total mass of the conduit 130, 130' having the material may be a mass of the conduit 130, 130' plus a mass of a material inside the conduit 130, 130'. The mass of the material in the conduit 130, 130' is directly proportional to the density of the material. Therefore, the density of this material may be proportional to the square of a period at which the conduit 130, 130' containing the material oscillates multiplied by the spring constant of the conduit 130, 130'. Hence, by determining the period at which the conduit 130, 130' oscillates and by appropriately scaling the result, an accurate measure of the density of the material contained by the conduit 130, 130' can be obtained. The meter electronics 20 can determine the period or resonance frequency using the sensor signals 165 and/or the drive signal 185. The conduits 130, 130' may oscillate with more than one vibration mode. As will be explained in more detail in the following, the meter electronics 20 may totalize a flow rate of a multi-phase/single phase flow.

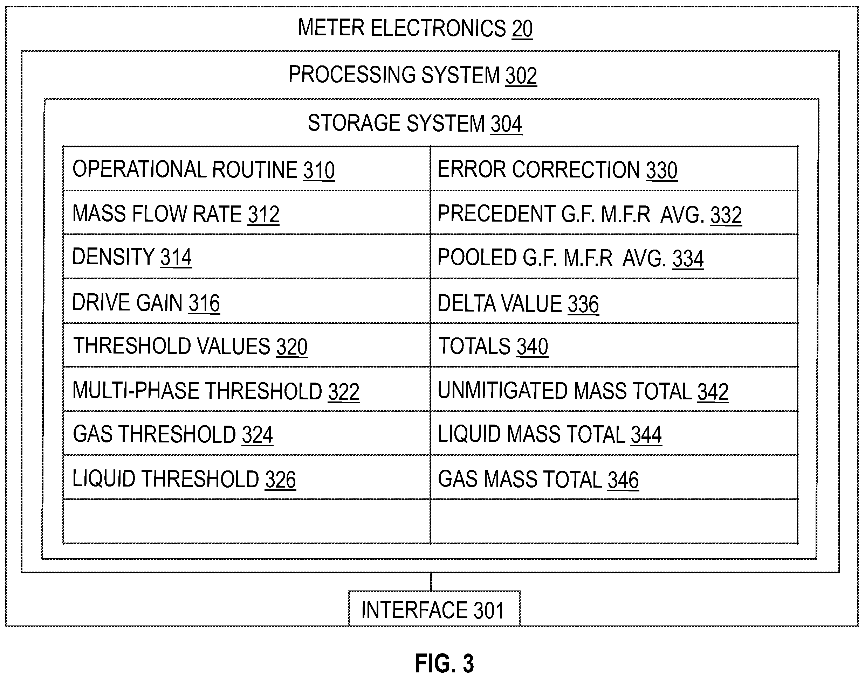

FIG. 3 shows the meter electronics 20 configured to totalize a multi-phase/single-phase flow. As shown in FIG. 3, the meter electronics 20 includes an interface 301 and a processing system 302. The meter electronics 20 receives a vibrational response from a sensor assembly, such as the sensor assembly 10 described above for example. The meter electronics 20 can process the vibrational response to obtain flow properties of the flow material flowing through the sensor assembly 10. The meter electronics 20 may also perform checks, verifications, calibration routines, and/or the like, to ensure the flow properties of the flow material are accurately measured.

The interface 301 may receive the sensor signals 165 from one of the pick-off sensors 170l, 170r shown in FIGS. 1 and 2. The interface 301 may also be configured to receive a drive signal 185 from, for example, the signal conditioner 240. Although the drive signal 185 is shown as being provided by signal conditioner 240, a back-EMF may be provided from the sensor assembly 10 to the meter electronics 20 due to vibration of the conduits 130 in the sensor assembly 10. Accordingly, the interface 301 may be configured to receive the sensor signals 100 shown in FIG. 2.

The interface 301 can perform any necessary or desired signal conditioning, such as any manner of formatting, amplification, buffering, etc. Alternatively, some or all of the signal conditioning can be performed in the processing system 302. In addition, the interface 301 can enable communications between the meter electronics 20 and external devices. The interface 301 can be capable of any manner of electronic, optical, or wireless communication. The interface 301 can provide information based on the vibrational response. The interface 301 may be coupled with a digitizer, such as the CODEC 222 shown in FIG. 2, wherein the sensor signal comprises an analog sensor signal. The digitizer samples and digitizes an analog sensor signal and produces a digitized sensor signal.

The processing system 302 conducts operations of the meter electronics 20 and processes flow measurements from the sensor assembly 10. The processing system 302 executes one or more processing routines and thereby processes the flow measurements in order to produce one or more flow properties. The processing system 302 is communicatively coupled to the interface 301 and is configured to receive the information from the interface 301.

The processing system 302 can comprise a general-purpose computer, a micro-processing system, a logic circuit, or some other general purpose or customized processing device. Additionally, or alternatively, the processing system 302 can be distributed among multiple processing devices. The processing system 302 can also include any manner of integral or independent electronic storage medium, such as the storage system 304.

The storage system 304 can store vibratory meter parameters and data, software routines, constant values, and variable values. In one embodiment, the storage system 304 includes routines that are executed by the processing system 302, such as an operational routine 310. The processing system 302 may further be configured to execute other routines such as a zero-calibration routine and zero-verification routine of the vibratory meter 5. The storage system can also store statistical values, such as a mean, standard deviation, confidence interval, etc., or the like.

The operational routine 310 may determine a mass flow rate 312, a density value 314, and a drive gain 316 based on the sensor signals received by the interface 301. The mass flow rate 312 may be comprised of a directly measured mass flow rate value, as described above, or the like. The mass flow rate 312 may be determined from the sensor signals, such as a time delay between a left pick-off sensor signal and a right pick-off sensor signal. The density value 314 may also be determined from the sensor signals by, for example, determining a frequency from one or both of the left and right pick-off sensor signals, as is described above. The mass flow rate 312 and the density value 314 may not include estimated values.

The term drive gain may refer to a measure of the amount of power needed to drive the flow tubes to specified amplitude, although any suitable definition may be employed. For example, the term drive gain may, in some embodiments, refer to drive current, pickoff voltage, or any signal measured or derived that indicates the amount of power needed to drive the conduits 130, 130' at a particular amplitude. The drive gain may be used to detect multi-phase flow by utilizing characteristics of the drive gain, such as, for example, noise levels, standard deviation of signals, damping-related measurements, and any other means known in the art to detect mixed-phase flow. These metrics may be compared across the pick-off sensors 170l and 170r to detect a mixed-phase flow.

The storage system 304 is also shown as including threshold values 320. As shown in FIG. 3, the threshold values 320 includes a multi-phase threshold 322, a gas threshold 324, and a liquid threshold 326. The drive gain 316 may be compared to the multi-phase threshold 322 to detect a multi-phase flow, such as a mist flow. As will also be explained in more detail in the following, the density value 314 may be compared to the gas threshold 324 to detect a multi-phase flow and/or a gas flow and compared to the liquid threshold 326 to detect a liquid flow. A phase of the multi-phase/single-phase flow may be detected using combinations of comparisons between the density value 314 and the drive gain 316, and the threshold values 320. For example, the liquid flow may also be detected if the density value 314 is greater than the liquid threshold 326 and the drive gain 316 is less than the multi-phase threshold 322. Similarly, a gas flow may be detected if the density value 314 is less than the gas threshold 324 and the drive gain 316 is less than the multi-phase threshold 322. Accordingly, the threshold values 320 can be used to accurately totalize a multi-phase/liquid-phase flow.

The storage system 304 is accordingly also shown as including error correction 330 related parameters. More specifically, a totalizing to a gas mass total may include an error if measured mass flow rates of a liquid flow are cumulated instead of an estimated gas mass flow rate of the liquid flow. As can be appreciated, the estimated gas mass flow rate of the liquid flow may be zero, although any suitable value may be employed, such as a nominal estimate of gas content of the liquid flow, for example. However, the liquid flow may or may not be present in the multi-phase/single-phase flow. Accordingly, automatically detecting the liquid phase and switching a totalizing between measured mass flow rates and/or various estimated mass flow rates may improve an accuracy of a total mass flow, as the following explains, by distinguishing between gas and multi-phase flows that occur before and after a liquid flow as well as between the liquid flow and the multi-phase flows.

A gas flow that occurs before a multi-phase flow may be referred to as a precedent gas flow. A gas flow that occurs after the multi-phase flow may be referred to as a subsequent gas flow. As discussed above, the multi-phase/single-phase flow may also include a liquid flow interposed between two multi-phase flows. Accordingly, the multi-phase flow that occurs before the liquid flow may be referred to as a precedent multi-phase flow and the multi-phase flow after the liquid flow may be referred to a subsequent multi-phase flow.

As shown in FIG. 3, the error correction 330 related parameters include a precedent gas flow measured mass flow rate average 332, a pooled gas flow measured mass flow rate average 334, and delta values 336. The precedent gas flow measured mass flow rate average 332 may be an average of mass flow rate 312 measurements of a precedent gas flow or a gas flow that occurs prior to a multi-phase flow of a multi-phase/single-phase flow. The pooled gas flow measured mass flow rate average 334 may be an average of mass flow rate 312 measurements of a precedent gas flow and a subsequent gas flow.

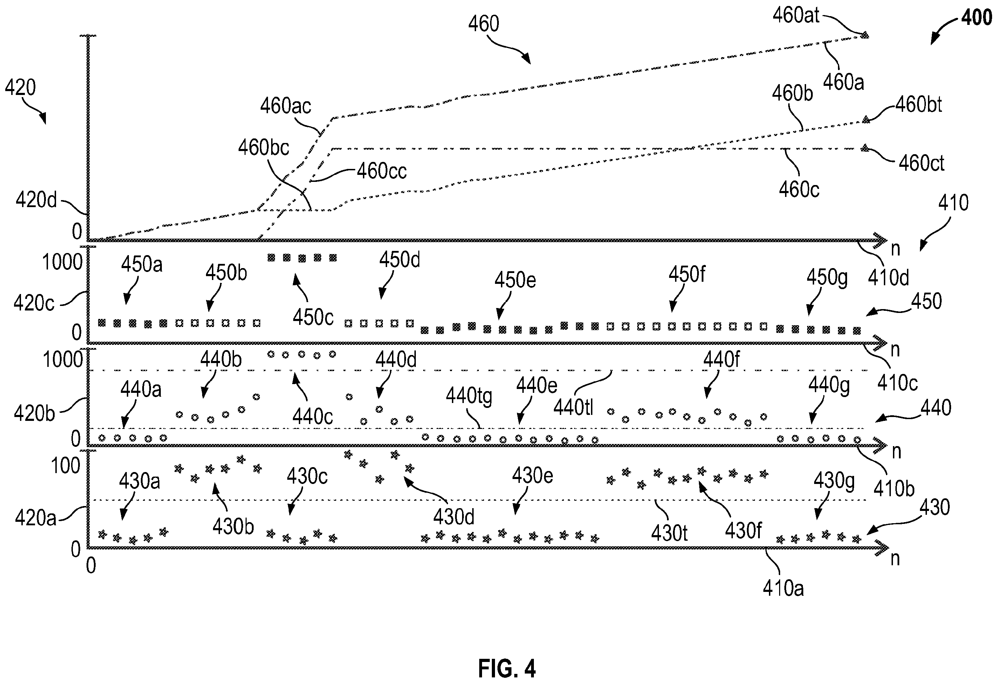

The delta values 336 may be used to correct or adjust a cumulation of estimated gas mass flow rate values and estimated liquid mass flow rate values of a multi-phase flow. A difference between the precedent gas flow measured mass flow rate average 332 and the pooled gas flow measured mass flow rate average 334 may be a gas delta value of the delta values 336. The gas delta value may be used to adjust or correct an estimated gas mass flow rate of a multi-phase flow, as will be described below with reference to FIG. 4. An estimated liquid flow rate for a multi-phase flow may be defined as a difference between an average of the mass flow rate 312 measurement values of the multi-phase flow and the estimated gas mass flow rate of the multi-phase flow. A liquid delta value of the delta values 336 may be defined as the additive inverse of the gas delta value for the same multi-phase flow. The liquid delta value may be used to adjust or correct the estimated liquid flow rate of the multi-phase flow.

Referring to FIG. 3, the storage system 304 also includes totals 340, which may be comprised of mass totals of various flows within a multi-phase/single-phase flow. The totals 340 may be the result of totalizing the mass flow rate 312 measurements, corrected mass flow rate values, and/or estimated mass flow rate values, such as estimated gas mass flow rate values. For example, the precedent gas flow measured mass flow rate average 332 may be used as an estimate of a gas mass flow rate of a multi-phase flow. The processing system 302 may also cumulate estimated gas mass flow rate values of a liquid flow, which may comprise cumulating zero values, nominal values, actual estimated values, and/or discontinuing cumulation of any values while the liquid phase is detected and/or until a non-liquid phase is detected. Accordingly, the processing system 302 may cumulate measured gas mass flow rate values of gas flows and estimated gas mass flow rate values of multi-phase flows and the liquid flows to determine a gas mass total. As shown in FIG. 3, the storage system 304 includes an unmitigated mass total 342, a liquid mass total 344, and a gas mass total 346.

With respect to the delta values 336 associated with the multi-phase flows, as explained above, the estimated gas mass flow rate values of a multi-phase flow may be subsequently corrected with the gas delta value of the delta values 336. For example, an estimated gas mass flow rate of a multi-phase flow may be the precedent gas flow measured mass flow rate average 332 and may, for example, be five sample widths. Totalizing the mass flow rate values of the multi-phase flow may comprise summing the precedent gas flow measured mass flow rate average 332 five times. Where the gas delta value of the delta values 336 is also used, then the totalizing of the multi-phase flow may further include summing the gas delta value of the delta values 336 five times. The summation of the gas delta value may occur at any time after the pooled gas flow measured mass flow rate average 334 is determined.

The unmitigated mass total 342 may comprise a final cumulation or summation of all the mass flow rate 312 measurements in a multi-phase/single-phase flow. For example, the unmitigated mass total 342 may include a summation of the mass flow rate 312 values of the gas, multi-phase, and liquid flows. As can be appreciated, the unmitigated mass total 342 does not distinguish between the phases and does not include any estimated, corrected, or adjusted mass flow rate values. However, mass flow rate 312 values cumulated into the unmitigated mass total 342 and/or an unmitigated mass total 342 value may be used to determine an accurate estimated gas and/or liquid mass flow rate value of a multi-phase flow.

Accordingly, the liquid mass total 344 may include a cumulation of estimated liquid mass flow rates of the multi-phase flows and mass flow rate 312 values of the liquid flows. However, the liquid mass total 344 may not include mass flow rate 312 measurements of the gas flows or estimated gas mass flow rates of the multi-phase flows. Similarly, the gas mass total 346 may include a cumulation of mass flow rate 312 values of gas flows and the estimated gas mass flow rates of the multi-phase flows and the liquid flows. As can be appreciated, the estimated gas mass flow rates of the liquid flows may be zero in many situations.

The liquid mass total 344 may be determined by any suitable means. For example, the liquid mass total 344 may be determined by cumulating the estimated liquid flow rates of a multi-phase flow with measured and/or estimated liquid mass flow rate values of the liquid flows. For example, when a liquid flow is detected and the estimated gas mass flow rate of the liquid flow is zero, then the liquid mass total 344 may include a cumulation of measured mass flow rate 312 values of the liquid flow and a cumulation of the estimated liquid flow rates of the multi-phase flows. The liquid delta values may be used to further adjust or correct the estimated liquid flow rates of the multi-phase flows. Additionally, or alternatively, the liquid mass total 344 may be determined by subtracting the gas mass total 346 from the unmitigated mass total 342. Accordingly, as can be appreciated, because the multi-phase and liquid phase are detected, the desirably accurate mass flow rate values may be cumulated when totalizing a mass value. As a result, a desirably accurate mass total may therefore be achieved, as the following explains in more detail.

FIG. 4 shows a graph 400 illustrating various measurements of a multi-phase/single-phase flow. As shown in FIG. 4, the graph 400 includes a plurality of sample index ordinates 410 and a plurality of parameter value abscissas 420. The plurality of sample index ordinates 410 comprises a drive gain sample axis 410a, a density sample axis 410b, a mass flow rate measurement sample axis 410c, and a cumulative mass flow total sample axis 410d. As shown in FIG. 4, the plurality of sample index ordinates 410 are on a sample occurrence basis and are therefore unitless. The plurality of parameter value abscissas 420 is comprised of a drive gain axis 420a, a density axis 420b, a mass flow rate axis 420c, and a cumulative mass flow total axis 420d. The drive gain axis 420a is in units of percentage and ranges from zero to 100 percent. The density axis 420b is in units of $kg/m^3$ and ranges from zero to 1000 $kg/m^3$. The mass flow rate axis 420c is in unit of kg/s and ranges from zero to 1000 kg/s. The cumulative mass flow total axis 420d is in units of kg. However, any suitable units and scales may be employed.

The graph 400 also includes a drive gain plot 430, a density plot 440, a mass flow rate plot 450, and a plurality of cumulative mass flow rate plots 460. Also shown in FIG. 4 are thresholds for the drive gain plot 430 and the density plot 440. More particularly, the drive gain plot 430 is associated with a multi-phase threshold 430t and the density plot 440 is associated with a gas threshold 440tg and a liquid threshold 440tl. A multi-phase flow is detected when the drive gain plot 430 is greater than the multi-phase threshold 430t. With respect to the density plot 440, a non-gas flow may be detected when the density plot 440 is greater than the gas threshold 440tg or a gas flow may be detected when the density plot 440 is less than the gas threshold 440tg. Similarly, a non-liquid flow may be detected when the density plot 440 is less than the liquid threshold 440tl and a liquid flow may be detected when the density plot 440 is greater than the liquid threshold 440tl.

Accordingly, the drive gain plot 430, density plot 440, and mass flow rate plot 450 also respectively include measurements of single-phase flows and multi-phase flows. Accordingly, the drive gain plot 430, density plot 440, and the mass flow rate plot 450 may be representative of a value in the drive gain 316, the density value 314, and the mass flow rate 312 described above with reference to FIG. 3. Referring again to FIG. 4, the single-phase flows are comprised of gas flows and a liquid flow. The gas flows are indicated with reference characters having a fourth reference character of "a", "e", and "g". The liquid flow is referenced by a fourth reference character of "c". The multi-phase flows are referenced by fourth reference characters of "b", "d", and "f".

In particular, the drive gain plot 430 is comprised of a first gas flow drive gain plot 430a, a first multi-phase flow drive gain plot 430b, a liquid flow drive gain plot 430c, a second multi-phase flow drive gain plot 430d, a second gas flow drive gain plot 430e, a third multi-phase flow drive gain plot 430f, and a third gas flow drive gain plot 430g. In addition, the density plot 440 is comprised of a first gas flow density plot 440a, a first multi-phase flow density plot 440b, a liquid flow density plot 440c, a second multi-phase flow density plot 440d, a second gas flow density plot 440e, a third multi-phase flow density plot 440f, and a third gas flow density plot 440g. Additionally, the mass flow rate plot 450 is comprised of a first gas flow mass flow rate plot 450a, a first multi-phase flow mass flow rate plot 450b, a liquid flow mass flow rate plot 450c, a second multi-phase flow mass flow rate plot 450d, a second gas flow mass flow rate plot 450e, a third multi-phase flow mass flow rate plot 450f, and a third gas flow mass flow rate plot 450g.

As can be seen in FIG. 4, the mass flow rate plot 450 is depicted as square indicators. Some of the square indicators are solid and some of the square indicators are hollow. The solid square indicators represent mass flow rate values that are measured mass flow rates. The hollow square indicators represent mass flow rate values that are estimated mass flow rates. For example, the hollow indicators may be an average of two values represented by solid square indicators. As an illustration, the first multi-phase flow mass flow rate plot 450b is a plurality of an estimate of a gas mass flow rate determined by averaging one or more measured mass flow rate values of the first gas flow mass flow rate plot 450a. Other methods of obtaining an estimate of a gas mass flow rate of a multi-phase flow can be employed.

As can be seen, the values of the first multi-phase flow mass flow rate plot 450b are constant. Accordingly, as shown in FIG. 4, an assumption is made that the gas mass flow rate is constant through the entire multi-phase flow portion of the multi-phase/single-phase flow. Alternative methods may employ, for example, estimates that are linear or curved sloped values with end-point or boundary condition values that correspond to or are scaled to a latter value of the first gas flow mass flow rate plot 450a and an earlier value of the liquid flow mass flow rate plot 450c. Additionally or alternatively, the estimates of a gas mass flow rate of a multi-phase flow portion may be determined by using something other than a simple average of one or more values. For example, weighted averages may be employed where the weight is correlated with a proximity to a measured mass flow rate of a gas and/or liquid flow portions immediately preceding or succeeding a multi-phase flow. As can be appreciated from the above discussion, even though a gas mass flow rate of a multi-phase flow may be estimated, it may nevertheless be desirable to totalize measured mass flow rates of particular portions of a multi-phase/single-phase flow.

Accordingly, the cumulative mass flow rate plots 460 similarly include single phase portions and multi-phase flow portions in different types of cumulative mass flow rate plots. With more particularity, as shown in FIG. 4, the cumulative mass flow rate plots 460 comprises an unmitigated cumulative mass flow rate plot 460a, a gas cumulative mass flow rate plot 460b, and a liquid cumulative mass flow rate plot 460c. The unmitigated cumulative mass flow rate plot 460a includes a liquid flow unmitigated mass flow rate portion 460ac that illustrates an accumulation of the liquid flow mass flow rate plot 450c. Similarly, the liquid cumulative mass flow rate plot 460c includes a liquid flow liquid cumulative mass flow rate portion 460cc that also illustrates an accumulation of the liquid flow mass flow rate plot 450c. However, the gas cumulative mass flow rate plot 460b includes a non-cumulative portion 460bc that does not cumulate the mass flow rate values of the liquid flow mass flow rate plot 450c.

Each of the cumulative mass flow rate plots 460 end in a total mass value. For example, as shown in FIG. 4, the unmitigated cumulative mass flow rate plot 460a ends with an unmitigated mass total 460at, the gas cumulative mass flow rate plot 460b ends with a non-liquid mass total 460bt, and the liquid cumulative mass flow rate plot 460c ends with a liquid mass total 460ct. The unmitigated mass total 460at may be a total mass of the gas flow, the multi-phase flow, and the liquid flow of the multi-phase/single-phase flow. The non-liquid mass total 460bt may be a total mass of the gas flow and the multi-phase flow of the multi-phase/single-phase flow. The liquid mass total 460ct may be a total mass of the liquid flow of the multi-phase/single-phase flow.

A multi-phase/single-phase flow includes periods of only a single-phase flow and periods of only multi-phase flow. The periods of single-phase flow may include periods of substantially only gas flows and periods of substantially only liquid flow. Accordingly, a gas flow may refer to a portion of the multi-phase/single-phase flow that is comprised of only gas, a liquid flow may refer to a portion of the multi-phase/single-phase flow that is only liquid, and a multi-phase flow may be a portion of the multi-phase/single-phase flow that is only a multi-phase flow. The multi-phase flow may also be referred to as a mixed-phase flow. In some applications, the multi-phase flow may be comprised of mists. For example, the multi-phase flow may be comprised of atomized liquids or droplets of liquids that are suspended in a gas. The liquid-to-gas mass ratio may therefore be relatively low. Additionally, or alternatively, the periods of multi-phase flow may be significantly shorter in duration and quantity than the periods of gas flow.

Accordingly, a mass total of the multi-phase/single-phase flow may be desirably accurate (e.g., within an error tolerance) if the mass total of the multi-phase flow is based on estimated mass flow rate values, such as estimated gas mass flow rate values. For example, a gas mass flow rate of the multi-phase flow may be estimated from one or more gas flow portions of the multi-phase/single-phase flow. By way of illustration, a gas mass flow rate of a multi-phase flow portion of the multi-phase/single-phase flow may be estimated from one or more measured mass flow rates of a gas flow portion immediately preceding and/or succeeding the multi-phase flow. That is, the estimated gas mass flow rate of the multi-phase flow portion may be an estimate of a gas mass flow rate of the gas flow of the multi-phase flow that does not include an estimate of a mass flow rate of the mist or droplets in the multi-phase flow. The estimated gas mass flow rate of the multi-phase flow may be an average value of at least one measured mass flow rate value of a gas flow preceding and/or succeeding a multi-phase flow of the multi-phase/single-phase flow. An average of a single mass flow rate measurement value may be the mass flow rate measurement value.

As can be appreciated, a totalizing of the multi-phase/single-phase flow may be based on an estimated gas mass flow rate of the multi-phase flow and the liquid flow and measured mass flow rates of the gas flows. Accordingly, when the multi-phase/single-phase flow transitions from, for example, a gas flow to a multi-phase flow, the totalizing may correspondingly switch from the measured mass flow rate of the gas flow to an estimated gas mass flow rate of the multi-phase flow. The transition of the multi-phase/single-phase flow from the gas flow to the multi-phase flow may be detected by, for example, a drive gain, as is explained above. As is also explained above, the multi-phase/single-phase flow may also include a liquid flow.

For example, some multi-phase/single-phase flows may include a liquid flow portion that is between two multi-phase flow portions. That is, a multi-phase/single-phase flow may transition from a precedent or first gas flow to a precedent or first multi-phase flow, from the precedent multi-phase flow to a liquid flow, from the liquid flow to a second or subsequent multi-phase flow, and from the subsequent multi-phase flow to a second or subsequent gas flow. As can be appreciated from FIG. 4, a mass flow rate measurement of the liquid flow cannot be used to totalize a gas mass. Accordingly, a totalizing of the multi-phase/single-phase flow may switch from an estimated gas mass flow rate of a multi-phase flow to an estimated gas mass flow rate of the liquid flow when the liquid flow is detected. As can be appreciated, the gas mass flow rate of a liquid flow may be zero, although any suitable estimated gas mass flow rate value of the liquid flow may be used, such as a nominal value to account for, for example, entrained gas in the liquid flow.

For example, with reference to FIG. 4, a transition from a multi-phase flow to a liquid flow in a multi-phase/single-phase flow may be detected when the density plot 440 exceeds the liquid threshold 440tl and, in some examples, the drive gain plot 430 is less than the multi-phase threshold 430t. Accordingly, a totalizing of the mass flow rates of the multi-phase/single-phase flow may switch from an estimated gas mass flow rate of the multi-phase flow to an estimated gas mass flow rate of the liquid flow, which may, for example, be zero. For example, when totalizing gas flows, the precedent gas flow measured mass flow rate average 332 value described above may be an estimated gas mass flow rate that is cumulated during the multi-phase flow prior to the liquid flow and, when the liquid flow is detected, zero values may be cumulated while the liquid flow is detected. A transition from a liquid flow to a multi-phase flow may be detected when the density plot 440 falls below the liquid threshold 440tl while the drive gain plot 430 increases above the multi-phase threshold 430t. Accordingly, a totalizing of the multi-phase/single-phase gas flow may switch from cumulating an estimated gas mass flow rate of the liquid flow, which may be zero, to an estimated gas mass flow rate of a multi-phase flow and, subsequently, to a mass flow rate measurement of a gas flow.

Referring to FIG. 4, the gas flow that results in measurements indicated by the fourth reference character of "a" may be referred to as a first or precedent gas flow. That is, the precedent gas flow occurred before the liquid flow resulting in measurements indicated by the fourth reference character of "c". Similarly, the multi-phase flow that results in measurements indicated by the fourth reference character of "b" may be referred to as a first or precedent multi-phase flow. The multi-phase flow that occurs after the liquid flow indicated by the fourth reference character of "c" that results in measurements indicated by the fourth reference character of "d" may be referred to as a second or subsequent multi-phase flow. The gas flow that occurs after the liquid flow indicated by the reference character "c" that results in the measurements indicated by the fourth reference character of "e" may be referred to as a second or subsequent gas flow.

The estimated gas mass flow rate of the precedent multi-phase flow and the subsequent multi-phase flow may be an average of the measured mass flow rate of the precedent gas flow. Additionally, an average of the precedent and subsequent gas flow may be determined and used to determine a gas delta value, such as the gas delta value of the delta values 336 discussed above. The gas delta value may be, for example, a difference between the estimated gas mass flow rate of the precedent and subsequent multi-phase flows and the average of the measured mass flow rates of the precedent and the subsequent gas flows.

The gas delta value may be cumulated in a mass total to provide a corrected estimated mass flow rate of the precedent and subsequent multi-phase flows shown in FIG. 4. For example, the precedent multi-phase flow results in six estimated mass flow rate samples and the subsequent multi-phase flow results in five estimated mass flow rate samples, each of which has a sample value equal to that of the average of the measured mass flow rate of the precedent gas flow. Accordingly, the gas delta value may be summed eleven times to correct for the difference between the estimated gas mass flow rate of the multi-phase flow and the average value of the measured mass flow rates of the precedent and subsequent gas flows. These and other cumulations may be performed, as is explained in more detail in the following.

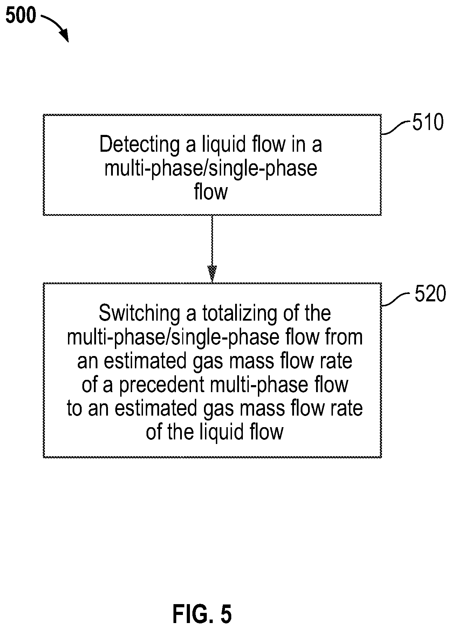

**FIG. 5** shows a method 500 of totalizing a flow rate of a multi-phase/single-phase flow. As shown in FIG. 5, the method 500 can detect a liquid flow in the multi-phase/single-phase flow in step 510. In step 520, the method 500 can switch a totalizing of the multi-phase/single-phase flow from an estimated mass flow rate of a precedent multi-phase flow to an estimated gas mass flow rate of the liquid flow. As described above, the estimated gas mass flow rate of the precedent multi-phase flow may be determined based on measured mass flow rates of a gas flow and the estimated gas mass flow rate of the liquid flow may, for example, be zero, although any suitable values may be employed. The method 500 may be performed on any suitable electronics, such as the meter electronics 20 described above. The method 500 may include additional steps and/or sub-steps as the following discussion illustrates.

The method 500 may further comprise preceding steps of detecting that a precedent multi-phase flow is being measured and switching the totalizing of the multi-phase/single-phase flow from a measured mass flow rate of a precedent gas flow to the estimated gas mass flow rate of the precedent multi-phase flow. Detecting that the precedent multi-phase flow is being measured may comprise, for example, determining if a drive gain is greater than a multi-phase threshold, although any suitable means may be employed. Additionally, or alternatively, the precedent multi-phase flow may be detected when a density is greater than a gas density threshold. The estimated gas mass flow rate of the precedent multi-phase flow may comprise an average of the measured mass flow rate of the precedent gas flow, although any suitable value may be employed.

The method 500 may further comprise succeeding steps of, for example, detecting that subsequent multi-phase flow is being measured and switching the totalizing of the multi-phase/single-phase flow from the estimated gas mass flow rate of the liquid to an estimated gas mass flow rate of the subsequent multi-phase flow. The method 500 may additionally comprise succeeding steps of detecting that a subsequent gas flow is being measured and switching the totalizing of the multi-phase/single-phase flow from the estimated gas mass flow rate of the subsequent multi-phase flow to a measured mass flow rate of the subsequent gas flow.

Additionally, the method 500 may average the measured mass flow rates of the precedent gas flow and the measured mass flow rates of the subsequent gas flow and determining a gas delta value between the estimated gas mass flow rates of the precedent and subsequent multi-phase flows and the average of the measured mass flow rates of the precedent gas flow and the subsequent gas flow. The totalizing of the multi-phase/single-phase flow may further comprise cumulating a plurality of the gas delta value. The number of cumulations of the gas delta value may be the same as the number of samples of the precedent and subsequent multi-phase flows.

The method 500 may also determine a gas mass total from the totalizing of the multi-phase/single-phase flow. For example, determining the gas mass total from the totalizing of the multi-phase/single-phase flow may comprise summing gas mass flow rate values between a totalizing start time and a totalizing end time. The method 500 may further comprise determining at least one of an unmitigated mass total and a liquid mass total. Determining the unmitigated mass total may comprise cumulating a measured mass flow rate of the multi-phase/single-phase flow and determining the liquid mass total may comprise subtracting the gas mass total from the unmitigated mass total. As discussed above, the difference between the liquid mass total and the unmitigated mass total may be corrected or adjusted by using liquid delta values that represent the additive inverse of the gas delta values that were used to correct the gas mass total. For example, liquid delta values may be cumulated to correct or adjust estimated liquid mass flow rates of the precedent and subsequent multi-phase flows. Detecting that the liquid flow is being measured may comprise determining that a density is greater than a liquid density threshold. Additionally, or alternatively, the method 500 may compare measured values with one or more thresholds in various combinations, or no combination, to detect a phase of the multi-phase/single-phase fluid.

The vibratory meter 5, meter electronics 20, and the method 500 described above totalize a multi-phase/single-phase flow. In particular, the vibratory meter 5, meter electronics 20, and the method 500 can detect that a liquid flow is being measured and switching the totalizing of the multi-phase/single-phase flow from an estimated mass flow rate of a precedent multi-phase flow to an estimated gas mass flow rate of the liquid flow. As a result, an error is not introduced due to, for example, atypical occurrences of liquid flow within an expected multi-phase flow. As can be appreciated, because the liquid flow is detected and the totalization is automatically switched when such a liquid flow is detected, then a mass total, such as a gas mass total, of the multi-phase/single-phase flow may be more accurate than if the liquid flow was not detected and the totalizing was not switched. Similarly, a liquid mass total may be more accurate because it is determined from a difference between an unmitigated mass total and the gas mass total.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description. The scope of the invention is determined by the herein appended claims.

**Claims**

1. A method for totalizing a flow rate of a multi-phase/single-phase flow, the method comprising:

    detecting that a liquid flow is being measured;
    and **characterised in that** it further comprises:
    switching a totalizing of the multi-phase/single-phase flow from an estimated gas mass flow rate of a precedent multi-phase flow to an estimated gas mass flow rate of the liquid flow.

2. The method of claim 1, further comprising detecting that the precedent multi-phase flow is being measured and switching the totalizing of the multi-phase/single-phase flow from a measured mass flow rate of a precedent gas flow to the estimated gas mass flow rate of the precedent multi-phase flow.

3. The method of claim 2, wherein detecting that the precedent multi-phase flow is being measured comprises determining at least one of if a drive gain is greater than a multi-phase threshold and if a density is greater than a gas density threshold.

4. The method of claim 2, wherein the estimated gas mass flow rate of the precedent multi-phase flow comprises an average of the measured mass flow rates of the precedent gas flow.

5. The method of claim 1, further comprising detecting that a subsequent multi-phase flow is being measured and switching the totalizing of the multi-phase/single-phase flow from the estimated gas mass flow rate of the liquid flow to an estimated gas mass flow rate of the subsequent multi-phase flow.

6. The method of claim 5, wherein the estimated gas mass flow rate of the subsequent multi-phase flow comprises an average of the measured mass flow rates of the precedent gas flow.

7. The method of claim 5, further comprising detecting that a subsequent gas flow is being measured and switching the totalizing of the multi-phase/single-phase flow from the estimated gas mass flow rate of the subsequent multi-phase flow to a measured mass flow rate of the subsequent gas flow.

8. The method of claim 7, further comprising averaging the measured mass flow rate of the precedent gas flow and the measured mass flow rate of the subsequent gas flow and determining a gas delta value between the estimated gas mass flow rate of the precedent and subsequent multi-phase flows and the average of the measured mass flow rates of the precedent gas flow and the measured mass flow rates of the subsequent gas flow.

9. The method of claim 8, wherein totalizing the multi-phase/single-phase flow further comprises cumulating the gas delta value.

10. The method of claim 1, further comprising determining a gas mass total from the totalizing of the multi-phase/single-phase flow by summing gas mass flow rate values between a totalizing start time and a totalizing end time.

11. The method of claim 10, further comprising determining at least one of an unmitigated mass total and a liquid mass total.

12. The method of claim 11, wherein determining the unmitigated mass total comprises cumulating a measured mass flow rate of the multi-phase/single-phase flow.

13. The method of claim 11, wherein determining the liquid mass total comprises subtracting the gas mass total from the unmitigated mass total.

14. The method of claim 1, wherein detecting that the liquid flow is being measured comprises determining that a density is greater than a liquid density threshold.

15. A meter electronics (20) for totalizing a flow rate of a multi-phase/single phase flow, the meter electronics (20) comprising:

an interface (301) configured to receive sensor signals from a sensor assembly (10) configured to contain and measure the multi-phase/single-phase flow; and
a processing system (302) communicatively coupled to the interface (301), the processing system (302) being configured to perform a method according to one of the foregoing claims 1 through 14.

**Patentansprüche**

1. Verfahren zum Summieren einer Durchflussrate einer mehrphasigen/einphasigen Strömung, wobei das Verfahren Folgendes umfasst:

Erfassen, dass eine Flüssigkeitsströmung gemessen wird;
und **dadurch gekennzeichnet, dass** es ferner umfasst:
Umschalten einer Summierung der mehrphasigen/einphasigen Strömung von einer geschätzten Gasmassendurchflussrate einer vorhergehenden mehrphasigen Strömung auf eine geschätzte Gasmassendurchflussrate der Flüssigkeitsströmung.

2. Verfahren nach Anspruch 1, das ferner das Erfassen umfasst, dass die vorhergehende mehrphasige Strömung gemessen wird, und Umschalten der Summierung der mehrphasigen/einphasigen Strömung von einer gemessenen Massendurchflussrate einer vorhergehenden Gasströmung auf die geschätzte Gasmassendurchflussrate der vorhergehenden mehrphasigen Strömung.

3. Verfahren nach Anspruch 2, wobei das Erfassen, dass die vorhergehende mehrphasige Strömung gemessen wird, das Bestimmen von mindestens einem der Folgenden umfasst: ob eine Antriebsverstärkung größer ist als ein mehrphasiger Schwellenwert und ob eine Dichte größer ist als ein Gasdichteschwellenwert.

4. Verfahren nach Anspruch 2, wobei die geschätzte Gasmassendurchflussrate der vorhergehenden mehrphasigen Strömung einen Durchschnitt der gemessenen Massendurchflussraten der vorhergehenden Gasströmung umfasst.

5. Verfahren nach Anspruch 1, das ferner das Erfassen umfasst, dass eine nachfolgende mehrphasige Strömung gemessen wird, und Umschalten der Summierung der mehrphasigen/einphasigen Strömung von der geschätzten Gasmassendurchflussrate der Flüssigkeitsströmung auf eine geschätzte Gasmassendurchflussrate der nachfolgenden mehrphasigen Strömung.

6. Verfahren nach Anspruch 5, wobei die geschätzte Gasmassendurchflussrate der nachfolgenden mehrphasigen Strömung einen Durchschnitt der gemessenen Massendurchflussraten der vorhergehenden Gasströmung umfasst.

7. Verfahren nach Anspruch 5, das ferner Folgendes umfasst: Erfassen, dass eine nachfolgende Gasströmung gemessen wird, und Umschalten der Summierung der mehrphasigen/einphasigen Strömung von der geschätzten Gasmassendurchflussrate der nachfolgenden mehrphasigen Strömung auf eine gemessene Massendurchflussrate der nachfolgenden Gasströmung.

8. Verfahren nach Anspruch 7, das ferner Folgendes umfasst: Mittelwertbildung der gemessenen Massendurchflussrate der vorhergehenden Gasströmung und der gemessenen Massendurchflussrate der nachfolgenden Gasströmung und Bestimmen eines Gas-Deltawertes zwischen der geschätzten Gasmassendurchflussrate der vorhergehenden und der nachfolgenden mehrphasigen Strömung und dem Mittelwert der gemessenen Massendurchflussraten der vorhergehenden Gasströmung und der gemessenen Massendurchflussraten der nachfolgenden Gasströmung.

9. Verfahren nach Anspruch 8, wobei das Summieren der mehrphasigen/einphasigen Strömung ferner das Kumulieren des Gas-Deltawertes umfasst.

10. Verfahren nach Anspruch 1, das ferner das Bestimmen einer Gasmassensumme aus der Summierung der mehrphasigen/einphasigen Strömung durch Summieren von Gasmassendurchflusswerten zwischen einer Summierungsstartzeit und einer Summierungsendzeit umfasst.

11. Verfahren nach Anspruch 10, das ferner das Bestimmen einer Gesamtmassensumme und/oder einer Flüssigkeitsmassensumme umfasst.

12. Verfahren nach Anspruch 11, wobei das Bestimmen der Gesamtmassensumme das Kumulieren einer gemessenen Massendurchflussrate der mehrphasigen/einphasigen Strömung umfasst.

13. Verfahren nach Anspruch 11, wobei das Bestimmen der Flüssigkeitsmassensumme das Subtrahieren der Gasmassensumme von der Gesamtmassensumme umfasst.

14. Verfahren nach Anspruch 1, wobei das Erfassen, dass der Flüssigkeitsströmung gemessen wird, das Bestimmen umfasst, dass eine Dichte größer als ein Flüssigkeitsdichteschwellenwert ist.

15. Zählerelektronik (20) zum Summieren einer Durchflussmenge einer mehrphasigen/einphasigen Strömung, wobei die Zählerelektronik (20) umfasst:

   eine Schnittstelle (301), die so konfiguriert ist, dass sie Sensorsignale von einer Sensoranordnung (10) empfängt, die so konfiguriert ist, dass sie die mehrphasige/einphasige Strömung enthält und misst; und
   ein Verarbeitungssystem (302), das kommunikativ mit der Schnittstelle (301) gekoppelt ist, wobei das Verarbeitungssystem (302) so konfiguriert ist, dass es ein Verfahren nach einem der vorhergehenden Ansprüche 1 bis 14 durchführt.

## Revendications

1. Procédé de totalisation d'un débit d'un écoulement multiphase/monophase, le procédé consistant à :

   détecter qu'un écoulement de liquide est en cours de mesure ;
   et le procédé étant **caractérisé en ce qu'**il consiste en outre à :
   passer une totalisation de l'écoulement multiphase/monophase d'un débit massique de gaz estimé d'un écoulement multiphase précédent à un débit massique de gaz estimé de l'écoulement de liquide.

2. Procédé selon la revendication 1, consistant en outre à détecter que l'écoulement multiphase précédent est en cours de mesure et à passer la totalisation de l'écoulement multiphase/monophase d'un débit massique mesuré d'un écoulement de gaz précédent au débit massique de gaz estimé de l'écoulement multiphase précédent.

3. Procédé selon la revendication 2, la détection du fait que l'écoulement multiphase précédent est en cours de mesure consistant à déterminer au moins une condition parmi si un gain d'excitation est supérieur à un seuil multiphase et si une masse volumique est supérieure à un seuil de masse volumique de gaz.

4. Procédé selon la revendication 2, le débit massique de gaz estimé de l'écoulement multiphase précédent comprenant une moyenne des débits massiques mesurés de l'écoulement de gaz précédent.

5. Procédé selon la revendication 1, consistant en outre à détecter qu'un écoulement multiphase suivant est en cours de mesure et à passer la totalisation de l'écoulement multiphase/monophase du débit massique de gaz estimé de l'écoulement liquide à un débit massique de gaz estimé de l'écoulement multiphase suivant.

6. Procédé selon la revendication 5, le débit massique de gaz estimé de l'écoulement multiphase suivant comprenant une moyenne des débits massiques mesurés de l'écoulement de gaz précédent.

7. Procédé selon la revendication 5, consistant en outre à détecter qu'un écoulement de gaz suivant est en cours de mesure et à passer la totalisation de l'écoulement multiphase/monophase du débit massique de gaz estimé de l'écoulement multiphase suivant à un débit massique mesuré de l'écoulement de gaz suivant.

8. Procédé selon la revendication 7, consistant en outre à calculer la moyenne du débit massique mesuré de l'écoulement de gaz précédent et du débit massique mesuré de l'écoulement de gaz suivant, et à déterminer une valeur delta de gaz entre le débit massique de gaz estimé des écoulements multiphases précédent et suivant et la moyenne des débits massiques mesurés de l'écoulement de gaz précédent et des débits massiques mesurés de l'écoulement de gaz suivant.

9. Procédé selon la revendication 8, la totalisation de l'écoulement multiphase/monophase consistant en outre à cumuler la valeur delta de gaz.

10. Procédé selon la revendication 1, consistant en outre à déterminer un total massique de gaz à partir de la totalisation de l'écoulement multiphase/monophase en additionnant des valeurs de débit massique de gaz entre un moment de début de totalisation et un moment de fin de totalisation.

11. Procédé selon la revendication 10, consistant en outre à déterminer au moins un total parmi un total massique non atténué et un total massique de liquide.

12. Procédé selon la revendication 11, la détermination du total massique non atténué consistant à cumuler un débit massique mesuré de l'écoulement multiphase/monophase.

13. Procédé selon la revendication 11, la détermination du total massique de liquide consistant à soustraire le total massique de gaz du total massique non atténué.

14. Procédé selon la revendication 1, la détection du fait que l'écoulement de liquide est en cours de mesure consiste à déterminer qu'une masse volumique est supérieure à un seuil de masse volumique de liquide.

15. Électronique de comptage (20) permettant de totaliser un débit d'un écoulement multiphase/monophase, l'électronique de comptage (20) comprenant :

une interface (301) configurée pour recevoir des signaux de capteur en provenance d'un ensemble capteur (10) configuré pour contenir et mesurer l'écoulement multiphase/monophase ; et
un système de traitement (302) couplé en communication à l'interface (301), le système de traitement (302) étant configuré pour réaliser un procédé selon l'une des revendications précédentes 1 à 14.

FIG. 1

EP 4 445 101 B1

**FIG. 2**

## METER ELECTRONICS 20

### PROCESSING SYSTEM 302

#### STORAGE SYSTEM 304

| | |
|---|---|
| OPERATIONAL ROUTINE 310 | ERROR CORRECTION 330 |
| MASS FLOW RATE 312 | PRECEDENT G.F. M.F.R AVG. 332 |
| DENSITY 314 | POOLED G.F. M.F.R AVG. 334 |
| DRIVE GAIN 316 | DELTA VALUE 336 |
| THRESHOLD VALUES 320 | TOTALS 340 |
| MULTI-PHASE THRESHOLD 322 | UNMITIGATED MASS TOTAL 342 |
| GAS THRESHOLD 324 | LIQUID MASS TOTAL 344 |
| LIQUID THRESHOLD 326 | GAS MASS TOTAL 346 |
| | |

INTERFACE 301

**FIG. 3**

**FIG. 4**

500

Detecting a liquid flow in a
multi-phase/single-phase
flow

510

Switching a totalizing of the
multi-phase/single-phase flow from
an estimated gas mass flow rate
of a precedent multi-phase flow
to an estimated gas mass flow rate
of the liquid flow

520

**FIG. 5**

**EP 4 445 101 B1**

## REFERENCES CITED IN THE DESCRIPTION

### Patent documents cited in the description

- WO 2016140733 A1